(19) **Europäisches Patentamt / European Patent Office / Office européen des brevets**

(11) **EP 3 994 059 B1**

(12) **FASCICULE DE BREVET EUROPEEN**

(45) Date de publication et mention de la délivrance du brevet:
**09.08.2023 Bulletin 2023/32**

(21) Numéro de dépôt: **20743335.0**

(22) Date de dépôt: **26.06.2020**

(51) Classification Internationale des Brevets (IPC):
**B64C 27/00** (2006.01)    **G01H 1/00** (2006.01)

(52) Classification Coopérative des Brevets (CPC):
**G01H 1/003; B64C 27/006**

(86) Numéro de dépôt international:
**PCT/IB2020/056053**

(87) Numéro de publication internationale:
**WO 2021/001734 (07.01.2021 Gazette 2021/01)**

(54) **DISPOSITIF DE DÉTECTION DE L'APPROCHE D'UN ÉTAT D'ANNEAUX TOURBILLONNAIRES, AÉRODYNE À VOILURE TOURNANTE LE COMPRENANT, ET PROCÉDÉ ASSOCIÉ**

VORRICHTUNG ZUR ERFASSUNG DER ANNÄHERUNG EINES WIRBELRINGZUSTANDS, DREHFLÜGELLUFTFAHRZEUG MIT BESAGTER VORRICHTUNG UND ZUGEHÖRIGES VERFAHREN

DEVICE FOR DETECTING THE APPROACH OF A VORTEX RING STATE, ROTARY-WING AERODYNE COMPRISING SAID DEVICE, AND ASSOCIATED METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.07.2019 FR 1907082**

(43) Date de publication de la demande:
**11.05.2022 Bulletin 2022/19**

(73) Titulaires:
- **Etat Français Représenté par le Délégué Général de l'Armement**
  **75509 Paris Cedex 15 (FR)**
- **Office National d'Etudes et de Recherches Aérospatiales (ONERA)**
  **91120 Palaiseau (FR)**

(72) Inventeurs:
- **BINET, Laurent**
  **13450 Grans (FR)**
- **PEZET, Stéphane**
  **13920 Saint Mitre Les Remparts (FR)**
- **PRUNEL, Marc**
  **13090 Aix-en-Provence (FR)**

(74) Mandataire: **Cabinet Chaillot**
**16/20, avenue de l'Agent Sarre**
**B.P. 74**
**92703 Colombes Cedex (FR)**

(56) Documents cités:
**EP-A1- 3 406 520    EP-A2- 1 400 885**

- YEATES J E: "Flight measurements of vibration experiences by tandem helicopter in transition, vortex-ring state, landing approach, and yawed flight", NACA-TECHNICAL NOTE: TN 4409, septembre 1958 (1958-09), pages Frontpg.-20, XP002799003,
- DAVID J VARNES: "Development of a Helicopter Vortex Ring State Warning System Through a Moving Map Display Computer", NAVAL POSTGRADUATE SCHOOL THESIS, 1 septembre 1999 (1999-09-01), XP009100651, Monterey, California

- DATABASE COMPENDEX [Online] ENGINEERING INFORMATION, INC., NEW YORK, NY, US; September 1958 (1958-09), YEATES J E: "Flight measurements of vibration experiences by tandem helicopter in transition, vortex-ring state, landing approach, and yawed flight", Database accession no. EIX19590031634 & YEATES J E: "Flight measurements of vibration experiences by tandem helicopter in transition, vortex-ring state, landing approach, and yawed flight", NACA -- TECH NOTE; NACA -- TECHNICAL NOTE SEPT 1958, September 1958 (1958-09),

**Description**

La présente invention concerne le domaine des aérodynes à voilure tournante, et porte en particulier sur un dispositif de détection de l'approche d'un état d'anneaux tourbillonnaires pour un aérodyne à voilure tournante, sur un aérodyne à voilure tournante le comprenant, et sur un procédé de détection de l'approche d'un état d'anneaux tourbillonnaires.

L'amélioration de la sécurité lors de vols d'aérodynes à voilure tournante, notamment du type hélicoptère, et la diminution du nombre d'accidents et d'incidents impliquant des aérodynes à voilure tournante sont des axes de recherche constants pour les industriels et opérationnels dans le domaine des aérodynes à voilure tournante.

Un aérodyne à voilure tournante est généralement équipé d'au moins un rotor principal qui assure à la fois la sustentation et la propulsion de l'aérodyne. En conditions de fonctionnement normales, le rotor en rotation (entraîné par un ou plusieurs moteurs) aspire l'air situé en amont. Ce dernier traverse le rotor du haut vers le bas, et se voit accéléré par la vitesse induite du rotor, générant ainsi la portance.

Un domaine de fonctionnement des aérodynes à voilure tournante potentiellement dangereux est l'état d'anneaux tourbillonnaires (du terme anglo-saxon « Vortex Ring State ») ou encore désigné par « phénomène de vortex » par l'homme du métier.

L'état d'anneaux tourbillonnaires est un régime particulier de fonctionnement du rotor principal qui peut apparaître en vol de descente à faible vitesse d'avancement, généralement inférieur à 25 noeuds, et pour des taux de descente modérés, généralement de l'ordre de -1000 pieds par minute. Dans cette situation, l'aérodyne à voilure tournante peut entrer dans son propre sillage rotor, conduisant à une ré-ingestion de filets d'air en extrémité du disque rotor.

Les tourbillons ainsi créés conduisent à une augmentation des vibrations, à une perte de la portance (comparable à un décrochage sur aérodynes à voilure fixe) et à une contrôlabilité réduite de l'aérodyne à voilure tournante. Il s'en suit une perte importante d'altitude pouvant se révéler fatale dans le cas d'un aérodyne proche du sol lors de l'apparition du phénomène de vortex, dans les phases d'approche notamment.

Il existe cependant une grande incertitude sur les conditions d'apparition de l'état d'anneaux tourbillonnaires. Par exemple, lors d'essais en vol d'entrée en phénomène de vortex avec un hélicoptère Dauphin de la société Sud-Aviation, le phénomène de vortex est apparu pour des vitesses verticales variant de -800 pieds par minute à -1500 pieds par minute sur une gamme de vitesse d'avancement allant du stationnaire à 20 noeuds, et ce uniquement pour les cas représentatifs d'une phase d'approche (c'est-à-dire, descente à faible vitesse). L'apparition du phénomène de vortex est fortement liée à la dynamique de l'aérodyne à voilure tournante. On peut aisément comprendre, par exemple, que l'attitude du disque rotor ou sa dynamique modifie l'interaction pales-tourbillons, et dès lors, les conditions et caractéristiques de l'entrée en phénomène de vortex.

Les essais en vol ont également montré que des conditions de vol extrêmement proches en termes de vitesse d'avancement et de vitesse de descente peuvent conduire ou non à l'apparition d'un phénomène de vortex. Le domaine de vortex dépendant de nombreux paramètres, la définition à priori de celui-ci n'est pas aisée et de grandes marges de sécurité doivent être prises, limitant ainsi le domaine de vol considéré comme sûr.

Outre le fait que la définition d'un domaine estimé d'état d'anneaux tourbillonnaires ne soit pas suffisant pour garantir avec certitude la non-entrée en état d'anneaux tourbillonnaires sans nécessité des marges de sécurité conséquentes, il n'existe pas à l'heure actuelle de méthode réellement efficace et précise pour mesurer ou estimer la vitesse air de l'aérodyne à voilure tournante dans le domaine des basses vitesses. La méconnaissance des limites précises de ce domaine de vortex et l'incapacité de mesurer les paramètres influents conduisent encore de nos jours à de nombreux accidents.

La demande EP1400885 décrit un giravion comportant des accéléromètres disposés à différents endroits pour mesurer des vibrations et faire générer, par des actionneurs, des vibrations opposées afin d'éliminer les vibrations mesurées. Ce document ne décrit pas l'utilisation de moyens pour détecter l'approche d'un phénomène de vortex.

La demande de brevet américain US2006006279A1 décrit un système de commande pour empêcher le phénomène de vortex par mesure du couple mât rotor. Destiné plus particulièrement aux aérodynes à rotor basculant, la détection d'une différence entre les deux couples mâts rotors indique l'entrée potentielle d'un des rotors en phénomène de vortex. Une diminution brutale du couple rotor, sur un hélicoptère, est également prise en compte et considérée comme étant annonciatrice du phénomène de vortex. Des commandes spécifiques sont alors envoyées sur les pales afin de retarder la formation des anneaux tourbillonnaires autour du disque rotor. La variation du couple rotor est un phénomène connu à l'entrée du phénomène de vortex, liée à la variation des charges sur le rotor due à la présence des tourbillons. Cependant, cette demande de brevet américain porte plus spécifiquement sur la génération des signaux à envoyer au niveau des pales plutôt que sur le moyen pour détecter l'approche du phénomène de vortex, la mesure du couple rotor étant d'ores et déjà un paramètre de base mesuré sur les aérodynes à voilure tournante.

La demande internationale PCT WO2012007157A1 porte sur l'identification du changement de comportement de l'aérodyne en termes de vitesse verticale suite à des actions sur le pas collectif. Les modèles d'évolution de la vitesse induite du rotor principal en descente montrent en effet un changement de comportement de la courbe pas collectif/vitesse verticale à l'approche du phénomène de vortex. Il semble que, pour une même action sur le pas collectif, la réponse en vitesse verticale soit légèrement différente à l'approche du phénomène de vortex. Cependant, ce changement de comportement est très difficilement mesurable en vol. De plus, afin de mesurer la réponse en vitesse verticale à des actions du pas collectif, il est nécessaire d'envoyer des sollicitations du pas collectif sur le rotor au cours du vol, et notamment à l'approche de la zone de vortex. De telles sollicitations pourraient potentiellement faire entrer l'aérodyne en phénomène de vortex si ce dernier est en approche sans que le pilote n'en soit conscient.

Le phénomène de vortex implique le décrochage du disque rotor, et donc une perte de portance et une augmentation de la vitesse de descente (engendrant une perte d'altitude importante). C'est bien souvent cette augmentation de vitesse verticale qui sert d'indicateur au pilote quant au fait qu'il est entré en phénomène de vortex, et il est alors généralement déjà trop tard pour éviter un accident. Le changement du spectre vibratoire est lui aussi un indicateur pour les pilotes expérimentés, mais peu connaissent suffisamment bien ce phénomène et, d'autre part, les vibrations ressenties sont assez similaires à celles pouvant être ressenties lors d'autres phases de vol (par exemple, vol en conditions de BVI (de l'expression anglo-saxonne « Blade Vortex Interaction »), battement, manoeuvres dynamiques, virage sous facteur de charge, etc.). Néanmoins, l'intensité du phénomène de vortex n'est pas systématiquement la même, et dépend notamment de la vitesse d'avancement à laquelle se trouve l'aérodyne et/ou de la façon dont l'aérodyne se rapproche du domaine de vortex (par exemple, lors d'une décélération, d'une augmentation de la vitesse de descente à vitesse d'avancement constante, etc.). Si toutefois la détection ne se faisait pas suffisamment tôt, ou si le pilote ne réagissait pas de manière appropriée afin d'éviter l'entrée en phénomène de vortex (par méconnaissance du phénomène ou une autre raison), un système pouvant indiquer clairement au pilote que l'aérodyne est effectivement entré en phénomène de vortex serait un apport tout à fait appréciable.

En outre, les pilotes sont plutôt sensibles aux basses fréquences et les changements du spectre vibratoire hautes fréquences ne sont pas ressentis par ceux-ci. Or, le phénomène de vortex peut se caractériser par une augmentation de l'intensité vibratoire jusqu'à de hautes fréquences.

Dans la publication « Flight measurements of the vibration experienced by a tandem helicopter in transition, vortex-ring state, landing, approach, and yawed flight », de J.E. Yeates, Note Technique 4409, Comité Consultatif National pour l'Aéronautique, septembre 1958, des mesures de vibrations ont été réalisées sur un appareil de type « Tandem » dans plusieurs conditions de vol dont le phénomène de vortex. Il y est indiqué que la vibration mesurée dans le phénomène de vortex est caractérisée par une grande pulsation irrégulière de l'enveloppe de vibration à une fréquence aléatoire, ce qui indique probablement une effusion des tourbillons. Néanmoins, cette étude ne portait pas sur un dispositif et un procédé permettant de détecter l'approche du phénomène de vortex, aucune description plus précise n'y étant apportée quant aux changements apportés au spectre vibratoire par le phénomène de vortex, cette étude se contentant de constater a posteriori un changement de l'enveloppe vibratoire une fois l'appareil dans le vortex.

La demande de brevet européen EP3406520A1 décrit un procédé d'anticipation de l'entrée dans un domaine de vortex par un giravion, dans lequel l'approche du vortex est détectée par mesure d'un paramètre caractérisant l'évolution de l'écoulement d'air autour du rotor du giravion, tel qu'une vitesse ou une pression, à l'aide d'un unique capteur. Cependant, ce procédé existant possède une robustesse de détection inférieure à celle d'un procédé utilisant plusieurs capteurs de vibration disposés en plusieurs endroits de l'appareil pour détecter une manifestation indirecte du phénomène de vortex. La présente invention vise à résoudre les inconvénients de l'état antérieur de la technique, en proposant un dispositif et un procédé de détection de l'approche d'un état d'anneaux tourbillonnaires pour un aérodyne à voilure tournante, par calcul en temps réel du spectre vibratoire de l'aérodyne à voilure tournante selon au moins l'un des axes longitudinal et vertical de l'aérodyne à voilure tournante, et détection ou non en temps réel, par analyse vibratoire, de l'approche d'un état d'anneaux tourbillonnaires en fonction du spectre vibratoire calculé, ce qui permet de détecter de manière précise et efficace l'approche de l'état d'anneaux tourbillonnaires par analyse en temps réel de la signature vibratoire de l'aérodyne à voilure tournante.

La présente invention a donc pour objet un dispositif de détection de l'approche d'un état d'anneaux tourbillonnaires pour un aérodyne à voilure tournante, caractérisé par le fait que ledit dispositif de détection comprend un ensemble de capteurs de vibration configurés pour être répartis dans ou sur l'aérodyne à voilure tournante et configurés pour détecter en différents points de l'aérodyne à voilure tournante des vibrations au moins selon les axes longitudinal et vertical de l'aérodyne à voilure tournante, ledit dispositif de détection comprenant en outre une unité de traitement de données reliée à l'ensemble de capteurs de vibration, ladite unité de traitement de données étant configurée pour : recevoir en temps réel des données de mesure en provenance de l'ensemble de capteurs de vibration, traiter les données de mesure reçues de manière à calculer en temps réel le spectre vibratoire de l'aérodyne à voilure tournante selon au moins l'un des axes longitudinal et vertical de l'aérodyne à voilure tournante au niveau d'au moins deux capteurs de vibration distincts parmi l'ensemble de capteurs de vibration, détecter ou non en temps réel, par analyse vibratoire, l'approche d'un état d'anneaux tourbillonnaires en fonction du spectre vibratoire calculé, et émettre une alarme en cas de détection de l'approche d'un état d'anneaux tourbillonnaires.

Ainsi, le dispositif de détection selon la présente invention vise à la protection de l'enveloppe de vol vis-à-vis du phénomène de vortex (ou état d'anneaux tourbillonnaires) de l'aérodyne à voilure tournante par détection de l'approche de ce phénomène de vortex par l'intermédiaire de mesures de capteurs de vibration et d'une analyse vibratoire en temps réel.

Le dispositif de détection selon la présente invention permet ainsi d'identifier une signature vibratoire précédent la survenue de l'état d'anneaux tourbillonnaires, de manière à émettre une alarme en cas de détection de l'approche de l'état d'anneaux tourbillonnaires.

Basé sur la mesure directe de vibrations dues à l'apparition des anneaux tourbillonnaires autour du disque rotor de l'aérodyne, le dispositif selon la présente invention a l'avantage de détecter le phénomène de vortex en lui-même, au travers de l'une de ses manifestations indirectes. La présente invention n'est donc pas basée sur un modèle de comportement ou une estimation de paramètres manquants (comme la vitesse air), mais permet au contraire une détection directe de l'approche du phénomène de vortex.

En outre, les mesures effectuées par les capteurs de vibration sont indépendantes du point de vol de l'aérodyne. Elles ne sont donc pas, par exemple, impactées par la méconnaissance des basses vitesses air.

Il est à noter que la détection directe de l'approche du phénomène de vortex réalisée au travers de l'analyse vibratoire pourra toutefois, le cas échéant, utiliser un modèle de domaine de vortex et les paramètres machines correspondants afin de limiter le taux de fausses alarmes, sans s'écarter du cadre de la présente invention.

L'apparition d'un spectre vibratoire caractéristique dans l'aérodyne à voilure tournante est due au passage des pales du rotor principal dans les tourbillons avant que ceux-ci ne soient suffisamment développés pour provoquer la chute de portance. La détection de l'apparition du phénomène de vortex par ce biais est donc réalisée quelques instants avant l'entrée réelle en phénomène de vortex, fournissant ainsi une marge de temps potentiellement suffisante pour prévenir le pilote ou effectuer des actions correctives par l'intermédiaire du système de commandes de vol de l'aérodyne à voilure tournante.

Il existe un nombre très important de causes de vibration sur la structure de l'aérodyne mais celles-ci sont bien connues et répertoriées. En effet, chaque partie en rotation de l'aérodyne (par exemple, rotor principal, rotor arrière, turbine, engrenage, etc.) provoque une vibration à une fréquence distincte connue et identifiable. La connaissance des régimes de rotation des différentes pièces tournantes de l'aérodyne fournit ainsi le spectre des fréquences et de leurs harmoniques pouvant être mesuré.

L'analyse de nombreux cas de vol, lors d'entrées en phénomène de vortex ou non, a ainsi montré que l'approche de l'état d'anneaux tourbillonnaires est détectable par un changement de la signature vibratoire de l'aérodyne, avec : une variation du niveau vibratoire tant aux basses fréquences qu'aux hautes fréquences ; et une modification de la structure du spectre vibratoire (la fréquence rotor n'étant plus prédominante). Selon une caractéristique particulière de l'invention, chaque capteur de vibration est un accéléromètre à trois axes, à savoir un axe longitudinal X correspondant à l'axe longitudinal de l'aérodyne à voilure tournante, un axe transversal Y correspondant à l'axe transversal de l'aérodyne à voilure tournante et un axe vertical Z.

Le rotor principal étant lié mécaniquement à la structure de l'aérodyne, les vibrations du rotor principal sont transmises à la structure de l'aérodyne. Ces vibrations sont ainsi mesurées à l'aide d'accéléromètres à trois axes placés à différents emplacements sur ou dans l'aérodyne.

Ainsi, chaque capteur de vibration de type accéléromètre à trois axes permet de mesurer les vibrations subies par l'aérodyne à l'emplacement d'installation dudit capteur de vibration, les vibrations pouvant ainsi être mesurées en temps réel selon les trois axes X, Y et Z de l'accéléromètre.

Les données de mesure provenant des capteurs de vibration sont, de préférence, échantillonnées à une fréquence égale à 4000 Hz afin d'assurer une bande passante de mesure fréquentielle allant jusqu'à 2000 Hz.

Selon une caractéristique particulière de l'invention, l'ensemble de capteurs de vibration comprend un premier accéléromètre à trois axes configuré pour être installé dans la cabine de l'aérodyne à voilure tournante, un deuxième accéléromètre à trois axes configuré pour être installé sur la boîte de transmission principale de l'aérodyne à voilure tournante, et un troisième accéléromètre à trois axes configuré pour être installé sur le plancher mécanique de l'aérodyne à voilure tournante à proximité du centre de gravité de l'aérodyne à voilure tournante.

Le premier accéléromètre est, de préférence, installé sous le siège du pilote dans la cabine de l'aérodyne.

Le deuxième accéléromètre est, de préférence, installé sur l'attache inférieure de la barre arrière gauche de suspension de la boîte de transmission principale de l'aérodyne.

Les données de mesure de vibration provenant des trois accéléromètres sont ensuite envoyées à l'unité de traitement de données, de type calculateur, pour un traitement d'analyse fréquentielle de ces données, de manière à détecter ou non l'approche de l'état d'anneaux tourbillonnaires.

Selon une caractéristique particulière de l'invention, l'unité de traitement de données est configurée pour réaliser au moins l'une parmi : une première analyse vibratoire sur les flux de données de mesure correspondant à l'axe longitudinal X et à l'axe vertical Z du deuxième accéléromètre à trois axes comprenant, pour chacun des flux de données de mesure correspondant à l'axe longitudinal X et à l'axe vertical Z du deuxième accéléromètre à trois axes, la comparaison de la fréquence fondamentale du rotor principal de l'aérodyne à voilure tournante à la fréquence prépondérante, c'est-à-dire correspondant au niveau maximal d'amplitude, du spectre vibratoire issu d'une transformée de Fourier discrète sur le flux de données de mesure correspondant, et, si la différence entre la fréquence prépondérante et la fréquence fondamentale du rotor principal est supérieure à un seuil de différence de fréquences prédéterminé, la génération d'un signal de détection associé au flux de données de mesure correspondant ; et une seconde analyse vibratoire sur les flux de données de mesure correspondant à l'axe vertical Z du premier accéléromètre à trois axes et correspondant à l'axe longitudinal X et à l'axe vertical Z du troisième accéléromètre à trois axes comprenant, pour chacun des flux de données de mesure correspondant à l'axe vertical Z du premier accéléromètre à trois axes et correspondant à l'axe longitudinal X et à l'axe vertical Z du troisième accéléromètre à trois axes, le filtrage numérique sans déphasage du flux de données de mesure correspondant à l'aide d'un filtre à réponse impulsionnelle finie passe-bas et d'un filtre à réponse impulsionnelle finie passe-haut ; le calcul de la valeur efficace du signal issu du filtre passe-bas et de la valeur efficace du signal issu du filtre passe-haut, le calcul d'un rapport d'énergie correspondant à la valeur efficace du signal issu du filtre passe-haut divisée par la valeur efficace du signal issu du filtre passe-bas, et, si le rapport d'énergie est supérieur à un seuil de rapport d'énergie prédéterminé correspondant, la génération d'un signal de détection associé au flux de données de mesure correspondant.

Ainsi, au moins l'une des première et seconde analyses vibratoires est effectuée par l'unité de traitement de données, de manière à détecter ou non l'approche de l'état d'anneaux tourbillonnaires lors de la détection d'un changement spécifique dans la signature vibratoire de l'aérodyne, les deux analyses vibratoires pouvant également être effectuées successivement ou simultanément par l'unité de traitement de données.

Sur les neuf voies de mesure fournies par les trois accéléromètres à trois axes, seules cinq voies sont ainsi utilisées pour le traitement des données et les analyses vibratoires, à savoir :

- pour la première analyse vibratoire, les voies correspondant à l'axe longitudinal X et à l'axe vertical Z du deuxième accéléromètre à trois axes (ci-après notées « voie 2 » et « voie 3 », respectivement) ; et
- pour la seconde analyse vibratoire, la voie correspondant à l'axe vertical Z du premier accéléromètre à trois axes (ci-après notée « voie 1 ») et les voies correspondant à l'axe longitudinal X et à l'axe vertical Z du troisième accéléromètre à trois axes (ci-après notées « voie 4 » et « voie 5 », respectivement).

La première analyse vibratoire porte sur les voies 2 et 3 des accéléromètres, et consiste à comparer la fréquence fondamentale du rotor principal correspondant au régime courant du rotor principal ($F_{rotor}$ = (NR * b) / 60, avec $F_{rotor}$ la fréquence fondamentale du rotor principal, NR la vitesse de rotation du rotor principal, et b le nombre de pales du rotor principal) et la fréquence prépondérante (fréquence correspondant au niveau maximal d'amplitude) du spectre vibratoire issu d'une transformée de Fourrier discrète réalisée sur les flux de données de mesure des voies 2 et 3. Une fenêtre de pondération de type « hanning » est, de préférence, utilisée dans le calcul de la transformée de Fourier discrète, celle-ci étant, de préférence, d'une largeur de 2 secondes équivalente à 8000 échantillons de données, avec un taux de rafraîchissement de 0,0625s.

Ainsi, lors de cette première analyse vibratoire, si la fréquence prépondérante est différente (au-delà du seuil de différence de fréquences prédéterminé par l'analyse d'essais en vol et pouvant être adapté en fonction de l'aérodyne) de la fréquence fondamentale du rotor $F_{rotor}$, alors un signal de détection est généré par la première analyse vibratoire sur la voie correspondante. Cette première analyse vibratoire peut donc fournir potentiellement deux signaux de détection, à savoir un possible signal de détection associé à la voie 2 et un possible signal de détection associé à la voie 3.

La seconde analyse vibratoire porte quant à elle sur les voies 1, 4 et 5 des accéléromètres. Sur une plage de données issues de ces voies (par exemple, N=8000 échantillons), un filtrage numérique sans déphasage est réalisé, à l'aide de filtres à réponse impulsionnelle finie (FIR) (de préférence, d'ordre 100) passe-bas (de préférence, fréquence de coupure de 19,5 Hz) et passe-haut (de préférence, fréquence de coupure de 150 Hz), chaque flux de données de mesure ainsi filtré ayant deux signaux notés respectivement ci-après $x_{low}$ et $x_{high}$.

La valeur efficace (RMS, de l'expression anglo-saxonne « Root Mean Square ») de chacun des flux filtrés est ensuite calculée, soit par exemple pour le signal issu du filtre passe-haut :

[Math 1]

$$RMS_{high} = \sqrt{\frac{1}{N}\left[\sum_{i=1}^{N}\left(x_{high}\right)^{2}\right]}$$

avec $RMS_{high}$ la valeur efficace issu du filtre passe-haut et N le nombre d'échantillons.

Ensuite, un « rapport d'énergie » correspondant à la valeur efficace du signal issu du filtre passe-haut divisée par la valeur efficace du signal issu du filtre passe-bas est calculé : ER = $RMS_{high}$ / $RMS_{low}$, avec ER le rapport d'énergie, $RMS_{high}$ la valeur efficace du signal issu du filtre passe-haut et $RMS_{low}$ la valeur efficace du signal issu du filtre passe-bas.

A chaque « rapport d'énergie » des voies 1, 4 et 5 correspond un seuil de rapport d'énergie spécifique prédéterminé.

Pour qu'un signal de détection soit généré par la seconde analyse vibratoire, il faut ainsi que l'un des rapports d'énergie soit supérieur à son seuil de rapport d'énergie spécifique prédéterminé.

Il est à noter que les seuils utilisés dans les deux analyses vibratoires pourraient également être modifiés suivant le type d'aérodyne et/ou le type de rotor principal.

Selon une caractéristique particulière de l'invention, l'unité de traitement de données est configurée pour réaliser simultanément la première analyse vibratoire et la seconde analyse vibratoire.

Ainsi, étant donné que les deux analyses vibratoires sont réalisées simultanément sur les données de mesure provenant des accéléromètres, la détection d'un changement dans la signature vibratoire de l'aérodyne est plus précise et fiable, ce qui permet d'éviter la génération de fausses alarmes.

En outre, étant donné qu'une augmentation importante de l'énergie de l'intensité vibratoire aux hautes fréquences n'est pas une particularité spécifique à l'état d'anneaux tourbillonnaires, il en découle que la combinaison des deux analyses vibratoires est préférable pour ne pas générer de fausses alarmes. Selon une caractéristique particulière de l'invention, l'unité de traitement de données est configurée pour réaliser une troisième analyse vibratoire comprenant : l'application d'une transformée d'Hilbert au flux de données de mesure correspondant à l'axe vertical Z du premier accéléromètre à trois axes permettant d'étendre le signal réel dans le domaine complexe ; l'application d'une transformée de Fourier rapide (FFT) au signal obtenu par transformée d'Hilbert ; le filtrage du signal obtenu par FFT de plus ou moins 5Hz autour de la fréquence fondamentale du rotor principal correspondant au régime courant du rotor principal (Frotor = (NR * b) / 60, avec Frotor la fréquence fondamentale du rotor principal, NR la vitesse de rotation du rotor principal, et b le nombre de pales du rotor principal) ; la reconstitution du signal filtré par application d'une transformée de Fourier inverse ; la réalisation d'un spectrogramme sur le signal reconstruit et la suppression de la partie fréquence négative du spectre ; le calcul de la déviation standard de l'amplitude du spectrogramme sur une fenêtre glissante d'une durée prédéfinie ; et, si la déviation standard calculée est supérieure à un seuil prédéfini, la génération d'un signal de détection.

Il est à noter que cette troisième analyse vibratoire est totalement indépendante des première et seconde analyses vibratoires et peut se substituer à ces dernières. Cependant, pour plus de robustesse, cette troisième analyse vibratoire peut également être associée aux première et seconde analyses vibratoires afin de corréler les détections et potentiellement d'éviter de fausses alarmes. Selon une caractéristique particulière de l'invention, l'unité de traitement de données est configurée pour détecter l'approche d'un état d'anneaux tourbillonnaires et émettre une alarme lorsque la première analyse vibratoire et la seconde analyse vibratoire génèrent simultanément au moins un signal de détection.

Ainsi, pour émettre une alarme indiquant l'approche de l'état d'anneaux tourbillonnaires, les deux analyses vibratoires distinctes doivent générer au moins un signal de détection de façon simultanée, ce qui permet d'éviter la génération de fausses alarmes.

Selon une caractéristique particulière de l'invention, l'unité de traitement de données est configurée pour détecter l'approche d'un état d'anneaux tourbillonnaires et générer une alarme lorsqu'au moins trois signaux de détection provenant des première et seconde analyses vibratoires sont générés simultanément.

Ainsi, dans ce cas, l'état d'anneaux tourbillonnaires est considéré comme étant proche lorsqu'au moins trois signaux de détection sont générés conjointement par les deux analyses vibratoires, ce qui permet de davantage éviter la génération de fausses alarmes et d'améliorer la fiabilité de détection de l'approche du phénomène de vortex.

Selon une caractéristique particulière de l'invention, l'unité de traitement de données est en outre configurée pour utiliser au moins l'une des mesures suivantes pour détecter l'approche d'un état d'anneaux tourbillonnaires : la mesure de la vitesse indiquée de l'aérodyne à voilure tournante, la mesure de la vitesse verticale de l'aérodyne à voilure tournante, et la mesure du régime de rotation du rotor principal de l'aérodyne à voilure tournante.

Ainsi, l'unité de traitement de données peut également utiliser les mesures fournies par l'instrumentation de base de l'aérodyne à voilure tournante lors de la détection de l'approche de l'état d'anneaux tourbillonnaires, de manière à obtenir des informations complémentaires sur le domaine de vol dans lequel se trouve l'aérodyne au temps courant. Ceci a pour but d'éviter de fausses alarmes si le niveau vibratoire vient à augmenter de façon importante alors que l'aérodyne est clairement hors du domaine de vortex (par exemple, lors de manoeuvres dynamiques à hautes vitesses d'avancement, ou d'un vol de montée).

L'instrumentation de base de l'aérodyne permet ainsi de récupérer les mesures de la vitesse indiquée, de la vitesse verticale et du régime de rotation du rotor principal.

Il est à noter que, bien que la centrale inertielle de bord de l'aérodyne fournisse les accélérations mesurées au centre de gravité de l'aérodyne, ces informations « de base » fournies par la centrale inertielle ne peuvent pas être utilisées seules pour effectuer l'analyse vibratoire. En effet, le taux d'échantillonnage de la centrale inertielle est bien trop faible (de l'ordre de quelques Hertz) pour effectuer une analyse fréquentielle suffisamment fine et à large bande passante. De plus, des filtres sont appliqués modifiant le signal pouvant être analysé.

Dans la première analyse vibratoire, la mesure du régime de rotation du rotor principal peut être utilisée par l'unité de traitement de données pour déterminer la fréquence fondamentale du rotor principal.

Dans chacune des première et seconde analyses vibratoires, la mesure de la vitesse indiquée et la mesure de la vitesse verticale peuvent, par exemple, être utilisées par l'unité de traitement de données de la manière suivante : génération du signal de détection uniquement si en outre la mesure de la vitesse indiquée est inférieure à 25 noeuds et la mesure de la vitesse verticale est inférieure à -700 pieds par minute.

Selon une caractéristique particulière de l'invention, le dispositif de détection comprend en outre une unité d'avertissement reliée à l'unité de traitement de données et configurée pour générer un avertissement d'approche d'état d'anneaux tourbillonnaires lorsque l'unité de traitement de données émet une alarme, ledit avertissement d'approche d'état d'anneaux tourbillonnaires étant au moins l'un parmi sonore, visuel et haptique.

La marge de temps disponible entre l'instant de détection, faite par mesure et analyse vibratoire en temps réel, et l'apparition du phénomène de vortex joue un rôle important dans l'efficacité de l'évitement du phénomène de vortex. Cette marge de temps permet la mise en oeuvre de la fonction d'avertissement du pilote de l'aérodyne, de manière à ce que le pilote puisse éviter la survenue de l'état d'anneaux tourbillonnaires en modifiant le pilotage de l'aérodyne. L'avertissement, généré en cas d'approche de l'état d'anneaux tourbillonnaires afin d'alerter l'équipage de l'aérodyne, peut être l'un parmi un avertissement sonore en provenance d'au moins un haut-parleur disposé dans la cabine de l'aérodyne, un avertissement visuel en provenance d'au moins indicateur lumineux et/ou d'au moins un dispositif d'affichage disposés dans la cabine de l'aérodyne, et un avertissement haptique (par exemple, par retour haptique sur le manche de pilotage de l'aérodyne).

La présente invention a également pour objet un aérodyne à voilure tournante comprenant un dispositif de détection de l'approche d'un état d'anneaux tourbillonnaires tel que décrit ci-dessus, l'ensemble de capteurs de vibration dudit dispositif de détection étant répartis dans ou sur l'aérodyne à voilure tournante.

Selon une caractéristique particulière de l'invention, l'aérodyne à voilure tournante comprend en outre un système de commandes de vol relié à l'unité de traitement de données du dispositif de détection et configuré pour modifier, de manière automatique ou semi-automatique, le pilotage de l'aérodyne à voilure tournante lorsque l'unité de traitement de données du dispositif de détection émet une alarme, de manière à empêcher l'entrée de l'aérodyne à voilure tournante dans l'état d'anneaux tourbillonnaires.

Ainsi, la marge de temps disponible entre l'instant de détection et l'apparition du phénomène de vortex permet la mise en oeuvre d'une fonction d'assistance au pilote par l'intermédiaire du système de commandes de vol de l'aérodyne.

En cas de détection de l'approche de l'état d'anneaux tourbillonnaires par le dispositif de détection installé dans l'aérodyne, le système de commandes de vol de l'aérodyne peut ainsi modifier, de manière automatique ou semi-automatique, les paramètres de vol de l'aérodyne afin d'éviter que l'aérodyne ne rentre dans l'état d'anneaux tourbillonnaires (par réduction du taux de descente ou actions sur le plateau cyclique (longitudinale ou latérale), par exemple).

La présente invention a en outre pour objet un procédé de détection de l'approche d'un état d'anneaux tourbillonnaires par un aérodyne à voilure tournante tel que décrit ci-dessus, ledit procédé comprenant, par l'unité de traitement de données du dispositif de détection de l'approche d'un état d'anneaux tourbillonnaires : recevoir en temps réel des données de mesure en provenance de l'ensemble de capteurs de vibration ; traiter les données de mesure reçues de manière à calculer en temps réel le spectre vibratoire de l'aérodyne à voilure tournante au niveau d'au moins deux capteurs de vibration distincts parmi l'ensemble de capteurs de vibration ; détecter ou non en temps réel, par analyse vibratoire, l'approche d'un état d'anneaux tourbillonnaires en fonction du spectre vibratoire calculé ; et émettre une alarme en cas de détection de l'approche d'un état d'anneaux tourbillonnaires.

Pour mieux illustrer l'objet de la présente invention, on va en décrire ci-après, à titre illustratif et non limitatif, un mode de réalisation préféré, avec référence aux dessins annexés.

Sur ces dessins :

[Fig. 1] représente trois vues de face d'un aérodyne à voilure tournante, de type hélicoptère, en montée, en état d'anneaux tourbillonnaires et en descente, respectivement ;

[Fig. 2a] est un graphique à titre d'exemple représentant la vitesse de descente d'un aérodyne à voilure tournante de type hélicoptère en fonction de sa vitesse d'avancement lors d'un vol d'essai ;

[Fig. 2b] est un graphique à titre d'exemple représentant la portance de l'aérodyne à voilure tournante de type hélicoptère en fonction du temps lors du vol d'essai de la Figure 2a ;

[Fig. 3] est une vue schématique de côté d'un aérodyne à voilure tournante de type hélicoptère comprenant un dispositif de détection de l'approche d'un état d'anneaux tourbillonnaires selon la présente invention ; et

[Fig. 4] est une vue schématique en perspective de la structure de l'aérodyne de la Figure 3.

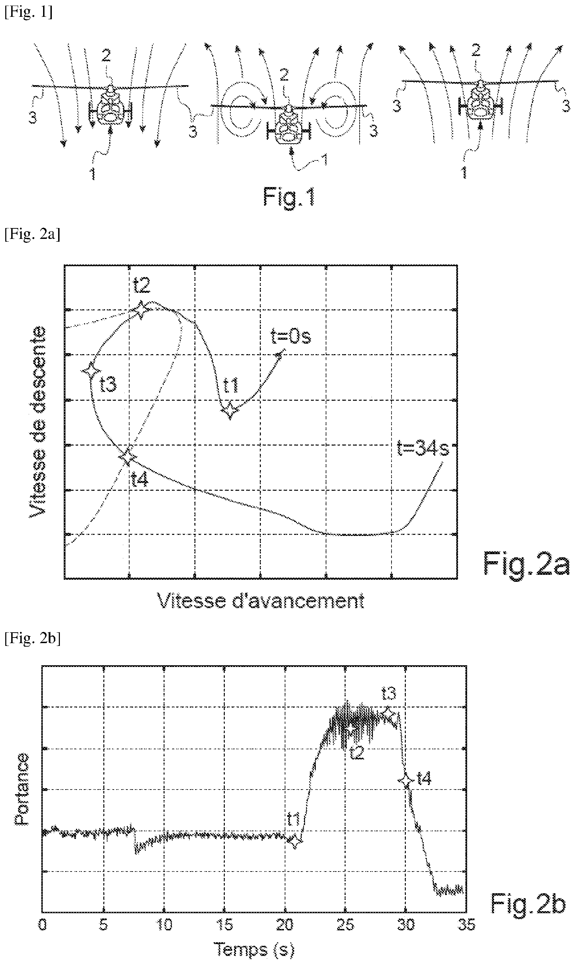

Si l'on se réfère à la Figure 1, on peut voir qu'il y est représenté un aérodyne à voilure tournante 1 de type hélicoptère, dans trois conditions de vol différentes.

L'aérodyne à voilure tournante 1 est équipé d'un rotor principal 2 qui assure à la fois la sustentation et la propulsion de l'aérodyne 1, ledit rotor principal 2 portant plusieurs pales 3.

A la Figure 1, pour chacune des trois vues, les flèches représentent le sens d'écoulement de l'air autour du rotor principal 2 de l'aérodyne à voilure tournante 1.

En condition de palier/montée, représentée sur la vue de gauche de la Figure 1, le rotor principal 2 en rotation aspire l'air situé en amont. Ce dernier traverse la circonférence des pales 3 du rotor 2 du haut vers le bas, et se voit accéléré par la vitesse induite du rotor 2, générant ainsi la portance de l'aérodyne 1.

Au contraire, en condition de forts taux de descente, représentée sur la vue de droite de la Figure 1, l'air traverse la circonférence des pales 3 du rotor 2 du bas vers le haut, ce qui entraîne la descente de l'aérodyne 1.

L'état d'anneaux tourbillonnaires (ou phénomène de vortex) est un régime particulier de fonctionnement du rotor principal 2 qui peut apparaître en vol de descente à faible vitesse d'avancement, généralement inférieure à 25 noeuds, et pour des taux de descente modérés, généralement de l'ordre de -1000 pieds par minute. Dans cette situation, représentée sur la vue centrale de la Figure 1, l'aérodyne à voilure tournante 1 peut entrer dans son propre sillage rotor, conduisant à une ré-ingestion de filets d'air en extrémité du disque rotor.

Les tourbillons ainsi créés conduisent à une augmentation des vibrations, à une perte de la portance et à une contrôlabilité réduite de l'aérodyne à voilure tournante 1. Il s'en suit une perte importante d'altitude pouvant se révéler fatale dans le cas où l'aérodyne 1 est proche du sol lors de l'apparition du phénomène de vortex, dans les phases d'approche notamment.

Si l'on se réfère à la Figure 2a, on peut voir qu'il y est représenté un graphique à titre d'exemple dans lequel la courbe en trait plein représente la vitesse de descente d'un aérodyne à voilure tournante 1 de type hélicoptère en fonction de sa vitesse d'avancement lors d'un vol d'essai, et si l'on se réfère à la Figure 2b, on peut voir qu'il y est représenté un graphique à titre d'exemple dont la courbe représente la portance en fonction du temps lors du vol d'essai de la Figure 2a. La durée du vol d'essai va de 0s à 34s, les instants t1, t2, t3 et t4 se trouvant entre 0 et 34s.

Le phénomène de vortex ou état d'anneaux tourbillonnaires est dû à l'apparition autour du disque rotor d'anneaux tourbillonnaires générés par la ré-ingestion par le rotor 2 de son propre flux, celui-ci étant bloqué par la masse d'air présente sous l'aérodyne à voilure tournante 1.

La formation et la désintégration aléatoires de ces tourbillons au cours du temps crée un écoulement fortement perturbé et instationnaire autour du rotor 2. Se mouvant dans cet environnement, les pales 3 sont alors soumises à un champ aérodynamique fortement perturbé, ce qui modifie de manière importante leurs incidences locales, et donc leurs charges. Portance et traînée sont alors fortement modifiées, ayant pour résultat un niveau vibratoire différent de celui mesurable en conditions de vol normales comme on peut le voir sur les

Figures 2a et 2b, où la portance est mesurée au cours du temps dans différents régimes de fonctionnement du rotor 2 en descente. De l'instant t=0s jusqu'à t1, l'aérodyne 1 se trouve à de forts taux de descente mais à une vitesse d'avancement suffisante pour ne pas être proche du domaine de vortex. Entre t1 et t2, le pilote réduit la vitesse de descente en augmentant la portance. De plus, en réduisant la vitesse d'avancement, il entre, entre les instants t2 et t4 en état d'anneaux tourbillonnaires. Sur la Figure 2b, on peut voir dès lors une forte augmentation des fluctuations de portance durant cette phase de vol en état d'anneaux tourbillonnaires entre les instants t2 et t4.

La courbe en pointillé sur la Figure 2a représente le domaine de vortex à l'intérieur duquel l'aérodyne 1 entre dans l'état d'anneaux tourbillonnaires.

Une fois entré en phénomène de vortex, l'aérodynamique au niveau des pales 3 est tellement perturbée qu'il s'en suit une perte de portance brutale, conduisant à une perte importante d'altitude potentiellement dangereuse. Néanmoins avant cela, les tourbillons commencent à se former et à modifier l'aérodynamique au niveau des pales 3, et donc à modifier la réponse vibratoire du rotor principal 2, puis la réponse vibratoire du reste de l'aérodyne à voilure tournante 1.

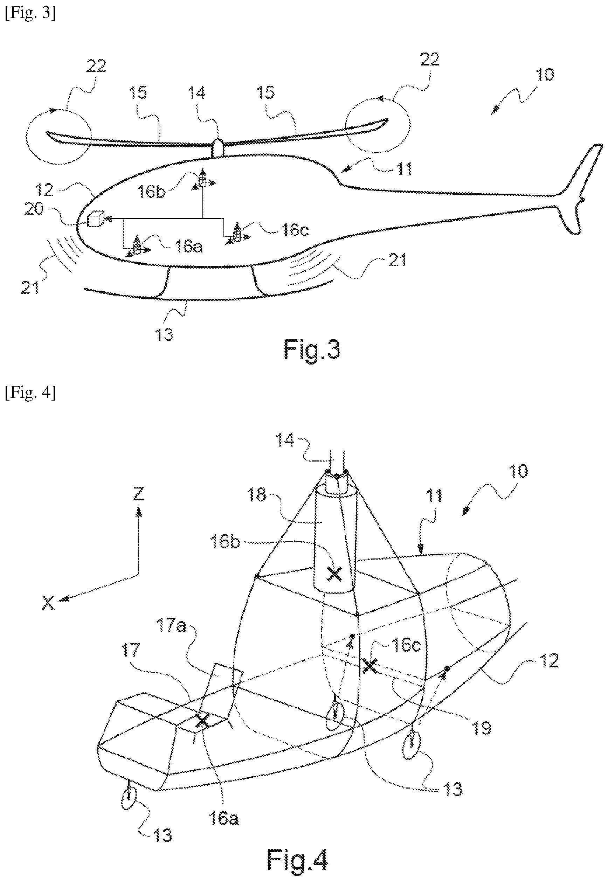

Si l'on se réfère aux Figures 3 et 4, on peut voir qu'il y est représenté un aérodyne à voilure tournante 10 de type hélicoptère selon la présente invention. L'aérodyne à voilure tournante 10 de type hélicoptère comprend une cellule 11 constituée d'un fuselage 12 et d'un train d'atterrissage 13.

L'aérodyne à voilure tournante 10 comprend en outre un rotor principal 14 portant plusieurs pales 15.

Il est à noter que certaines parties de l'aérodyne 10, telles que les pales 15, la queue du fuselage 12 et le carénage de la cabine dans le fuselage 12, n'ont pas été représentées à la Figure 4, de manière à ne pas surcharger le dessin. L'aérodyne à voilure tournante 10 selon la présente invention comprend en outre un dispositif de détection de l'approche d'un état d'anneaux tourbillonnaires comprenant trois capteurs de vibration 16a, 16b, 16c disposés dans l'aérodyne à voilure tournante 1 et configurés pour détecter en différents points de l'aérodyne à voilure tournante 10 des vibrations au moins selon l'axe longitudinal X et l'axe vertical Z (représentés à la Figure 4) de l'aérodyne à voilure tournante 10.

Le rotor principal 14 étant lié mécaniquement au fuselage 12 de l'aérodyne 10, les vibrations du rotor principal 14 sont transmises au fuselage de l'aérodyne 10. Ces vibrations sont ainsi mesurées en temps réel à l'aide des capteurs de vibration 16a, 16b, 16c.

Il est à noter que le dispositif de détection pourrait également comprendre au moins deux capteurs de vibration 16a, 16b, 16c, sans s'écarter du cadre de la présente invention.

Chaque capteur de vibration 16a, 16b, 16c est un accéléromètre à trois axes, à savoir un axe longitudinal X correspondant à l'axe longitudinal de l'aérodyne à voilure tournante 10, un axe transversal Y correspondant à l'axe transversal de l'aérodyne à voilure tournante 10 et un axe vertical Z.

Les trois capteurs de vibration 16a, 16b, 16c sont ainsi constitués d'un premier accéléromètre à trois axes 16a installé dans la cabine 17 de l'aérodyne à voilure tournante 10 sous le siège 17a du pilote, d'un deuxième accéléromètre à trois axes 16b installé sur la boîte de transmission principale 18 de l'aérodyne à voilure tournante 10, de préférence sur l'attache inférieure de la barre arrière gauche de suspension de la boîte de transmission principale 18, et d'un troisième accéléromètre à trois axes 16c installé sur le plancher mécanique 19 de l'aérodyne à voilure tournante 10 à proximité du centre de gravité de l'aérodyne à voilure tournante 10.

Le dispositif de détection comprend en outre une unité de traitement de données 20, de type calculateur, reliée aux trois capteurs de vibration 16a, 16b, 16c de manière filaire ou sans fil.

L'unité de traitement de données 20 est configurée pour : recevoir en temps réel les données de mesure de vibration en provenance des trois capteurs de vibration 16a, 16b, 16c ; traiter les données de mesure de vibration reçues de manière à calculer en temps réel le spectre vibratoire de l'aérodyne à voilure tournante 10 selon au moins l'un des axes longitudinal X et vertical Z de l'aérodyne à voilure tournante 10 au niveau d'au moins deux capteurs de vibration distincts parmi les trois capteurs de vibration 16a, 16b, 16c ; détecter ou non en temps réel, par analyse vibratoire, l'approche d'un état d'anneaux tourbillonnaires en fonction du spectre vibratoire calculé ; et émettre une alarme en cas de détection de l'approche d'un état d'anneaux tourbillonnaires.

Les données de mesure de vibration provenant des trois capteurs de vibration 16a, 16b, 16c sont, de préférence, échantillonnées à une fréquence égale à 4000 Hz afin d'assurer une bande passante de mesure fréquentielle allant jusqu'à 2000 Hz.

Basé sur la mesure directe de vibrations 21 dues à l'apparition d'anneaux tourbillonnaires 22 au niveau des pales 15 du rotor principal 14, le dispositif de détection selon la présente invention permet ainsi de détecter l'approche du phénomène de vortex de manière fiable.

L'apparition d'un spectre vibratoire caractéristique dans l'aérodyne à voilure tournante 10 est due au passage des pales 15 du rotor principal 14 dans les tourbillons 22 avant que ceux-ci ne soient suffisamment développés pour provoquer la chute de portance. La détection de l'approche du phénomène de vortex par ce biais est donc réalisée quelques instants avant l'entrée réelle en phénomène de vortex, fournissant ainsi une marge de temps potentiellement suffisante pour prévenir le pilote ou effectuer des actions correctives par l'intermédiaire du système de commandes de vol de l'aérodyne à voilure tournante 10, comme cela sera décrit plus en détail par la suite.

En particulier, l'unité de traitement de données 20 est configurée pour réaliser au moins l'une parmi :

- une première analyse vibratoire sur les flux de données de mesure correspondant à l'axe longitudinal X et à l'axe vertical Z du deuxième accéléromètre à trois axes 16b comprenant, pour chacun des flux de données de mesure correspondant à l'axe longitudinal X et à l'axe vertical Z du deuxième accéléromètre à trois axes 16b :
- la comparaison de la fréquence fondamentale du rotor principal 14 de l'aérodyne à voilure tournante 10 à la fréquence prépondérante, c'est-à-dire correspondant au niveau maximal d'amplitude, du spectre vibratoire issu d'une transformée de Fourier discrète sur le flux de données de mesure correspondant, et
- si la différence entre la fréquence prépondérante et la fréquence fondamentale du rotor principal 14 est supérieure à un seuil de différence de fréquences prédéterminé, la génération d'un signal de détection associé au flux de données de mesure correspondant ; et
- une seconde analyse vibratoire sur les flux de données de mesure correspondant à l'axe vertical Z du premier accéléromètre à trois axes 16a et correspondant à l'axe longitudinal X et à l'axe vertical Z du troisième accéléromètre à trois axes 16c comprenant, pour chacun des flux de données de mesure correspondant à l'axe vertical Z du premier accéléromètre à trois axes 16a et correspondant à l'axe longitudinal X et à l'axe vertical Z du troisième accéléromètre à trois axes 16c :
- le filtrage numérique sans déphasage du flux de données de mesure correspondant à l'aide d'un filtre à réponse impulsionnelle finie passe-bas et d'un filtre à réponse impulsionnelle finie passe-haut ;
- le calcul de la valeur efficace du signal issu du filtre passe-bas et de la valeur efficace du signal issu du filtre passe-haut,
- le calcul d'un rapport d'énergie correspondant à la valeur efficace du signal issu du filtre passe-haut divisée par la valeur efficace du signal issu du filtre passe-bas, et
- si le rapport d'énergie est supérieur à un seuil de rapport d'énergie prédéterminé correspondant, la génération d'un signal de détection associé au flux de données de mesure correspondant.

Sur les neuf voies de mesure fournies par les trois accéléromètres à trois axes 16a, 16b, 16c, seules cinq voies sont ainsi utilisées pour le traitement des données et les analyses vibratoires, à savoir :

- pour la première analyse vibratoire, les voies correspondant à l'axe longitudinal X et à l'axe vertical Z du deuxième accéléromètre à trois axes 16b (ci-après notées « voie 2 » et « voie 3 », respectivement) ; et

- pour la seconde analyse vibratoire, la voie correspondant à l'axe vertical Z du premier accéléromètre à trois axes 16a (ci-après notée « voie 1 ») et les voies correspondant à l'axe longitudinal X et à l'axe vertical Z du troisième accéléromètre à trois axes 16c (ci-après notées « voie 4 » et « voie 5 », respectivement).

La première analyse vibratoire porte sur les voies 2 et 3 de l'accéléromètre 16b, et consiste à comparer la fréquence fondamentale du rotor principal 14 correspondant au régime courant du rotor principal ($F_{rotor}$ = (NR * b) / 60, avec $F_{rotor}$ la fréquence fondamentale du rotor principal 14, NR la vitesse de rotation du rotor principal 14, et b le nombre de pales 15 du rotor principal 14) et la fréquence prépondérante du spectre vibratoire issu de la transformée de Fourrier discrète réalisée sur les flux de données de mesure des voies 2 et 3. Une fenêtre de pondération de type « hanning » est, de préférence, utilisée dans le calcul de la transformée de Fourrier discrète, celle-ci étant, de préférence, d'une largeur de 2 secondes équivalente à 8000 échantillons de données, avec un taux de rafraîchissement de 0,0625s.

Ainsi, lors de cette première analyse vibratoire, si la fréquence prépondérante est différente (au-delà du seuil de différence de fréquences prédéterminé par l'analyse d'essais en vol et pouvant être adapté en fonction de l'aérodyne 10) de la fréquence fondamentale du rotor 14 $F_{rotor}$, alors un signal de détection est généré par la première analyse vibratoire sur la voie correspondante. Cette première analyse vibratoire peut donc fournir potentiellement deux signaux de détection, à savoir un possible signal de détection associé à la voie 2 et un possible signal de détection associé à la voie 3.

La seconde analyse vibratoire porte quant à elle sur les voies 1, 4 et 5 des accéléromètres 16a, 16c. Sur une plage de données issues de ces voies (par exemple, N=8000 échantillons), un filtrage numérique sans déphasage est réalisé, à l'aide des filtres à réponse impulsionnelle finie (FIR) (de préférence, d'ordre 100) passe-bas (de préférence, fréquence de coupure de 19,5 Hz) et passe-haut (de préférence, fréquence de coupure de 150 Hz), chaque flux de données de mesure ainsi filtré ayant deux signaux notés respectivement ci-après $x_{low}$ et $x_{high}$.

La valeur efficace (RMS) de chacun des flux filtrés est ensuite calculée, soit par exemple pour le signal issu du filtre passe-haut :

[Math 2]

$$RMS_{high} = \sqrt{\frac{1}{N}\left[\sum_{i=1}^{N}(x_{high})^2\right]}$$

avec $RMS_{high}$ la valeur efficace issu du filtre passe-haut et N le nombre d'échantillons.

Ensuite, un « rapport d'énergie » correspondant à la valeur efficace du signal issu du filtre passe-haut divisée par la valeur efficace du signal issu du filtre passe-bas est calculé : ER = $RMS_{high}$ / $RMS_{low}$, avec ER le rapport d'énergie, $RMS_{high}$ la valeur efficace du signal issu du filtre passe-haut et $RMS_{low}$ la valeur efficace du signal issu du filtre passe-bas.

A chaque « rapport d'énergie » des voies 1, 4 et 5 correspond un seuil de rapport d'énergie spécifique prédéterminé.

Pour qu'un signal de détection soit généré par la seconde analyse vibratoire, il faut ainsi que l'un des rapports d'énergie soit supérieur à son seuil de rapport d'énergie spécifique prédéterminé.

Il est à noter que les seuils utilisés dans les deux analyses vibratoires pourraient également être modifiés suivant le type d'aérodyne 10 et/ou le type de rotor principal 14.

De préférence, la première analyse vibratoire et la seconde analyse vibratoire sont effectuées de manière simultanée par l'unité de traitement de données 20. En effet, étant donné qu'une augmentation importante de l'énergie de l'intensité vibratoire aux hautes fréquences n'est pas une particularité spécifique à l'état d'anneaux tourbillonnaires, il en découle que la combinaison des deux analyses vibratoires est préférable pour ne pas générer de fausses alarmes.

De manière préférentielle, l'unité de traitement de données 20 est configurée pour détecter l'approche d'un état d'anneaux tourbillonnaires et émettre une alarme lorsque la première analyse vibratoire et la seconde analyse vibratoire génèrent simultanément au moins un signal de détection, ce qui permet d'éviter la génération de fausses alarmes.

De manière plus préférentielle, l'unité de traitement de données 20 est configurée pour détecter l'approche d'un état d'anneaux tourbillonnaires et générer une alarme lorsqu'au moins trois signaux de détection provenant des première et seconde analyses vibratoires sont générés simultanément, ce qui permet de davantage éviter la génération de fausses alarmes et d'améliorer la fiabilité de détection de l'approche du phénomène de vortex.

L'unité de traitement de données 20 peut en outre être configurée pour utiliser au moins l'une des mesures suivantes, fournies par l'instrumentation de base de l'aérodyne 10, pour détecter l'approche d'un état d'anneaux tourbillonnaires : la mesure de la vitesse indiquée de l'aérodyne à voilure tournante 10, la mesure de la vitesse verticale de l'aérodyne à voilure tournante 10, et la mesure du régime de rotation du rotor principal 14 de l'aérodyne à voilure tournante 10, de manière à obtenir des informations complémentaires sur le domaine de vol dans lequel se trouve l'aérodyne 10 au temps courant. Ceci permet d'éviter de fausses alarmes si le niveau vibratoire vient à augmenter de façon importante alors que l'aérodyne 10 est clairement hors du domaine de vortex (par exemple, lors de manoeuvres dynamiques à hautes vitesses d'avancement, ou d'un vol de montée).

Dans chacune des première et seconde analyses vibratoires, la mesure de la vitesse indiquée et la mesure de la vitesse verticale peuvent, par exemple, être utilisées par l'unité de traitement de données 20 de la manière suivante : génération du signal de détection uniquement si en outre la mesure de la vitesse indiquée est inférieure à 25 noeuds et la mesure de la vitesse verticale est inférieure à -700 pieds par minute.

Le dispositif de détection selon la présente invention peut également comprendre une unité d'avertissement (non représentée sur les Figures 3 et 4) reliée à l'unité de traitement de données 20 et configurée pour générer un avertissement d'approche d'état d'anneaux tourbillonnaires lorsque l'unité de traitement de données 20 émet une alarme, ledit avertissement d'approche d'état d'anneaux tourbillonnaires étant au moins l'un parmi sonore, visuel et haptique.

La marge de temps disponible entre l'instant de détection et l'apparition du phénomène de vortex permet la mise en oeuvre de la fonction d'avertissement du pilote de l'aérodyne 10, de manière à ce que le pilote puisse éviter la survenue de l'état d'anneaux tourbillonnaires en modifiant manuellement le pilotage de l'aérodyne 10.

L'avertissement, généré en cas d'approche de l'état d'anneaux tourbillonnaires afin d'alerter l'équipage de l'aérodyne 10, peut ainsi être l'un parmi un avertissement sonore en provenance d'au moins un haut-parleur disposé dans la cabine 17 de l'aérodyne 10, un avertissement visuel en provenance d'au moins indicateur lumineux et/ou d'au moins un dispositif d'affichage disposés dans la cabine 17 de l'aérodyne 10, et un avertissement haptique (par exemple, par retour haptique sur le manche de pilotage à retours d'efforts de l'aérodyne 10).

L'aérodyne à voilure tournante 10 comprend en outre un système de commandes de vol (non représenté sur les Figures 3 et 4) relié à l'unité de traitement de données 20 et configuré pour modifier, de manière automatique ou semi-automatique, le pilotage de l'aérodyne à voilure tournante 10 lorsque l'unité de traitement de données 20 émet une alarme, de manière à empêcher l'entrée de l'aérodyne à voilure tournante 10 dans l'état d'anneaux tourbillonnaires.

La marge de temps disponible entre l'instant de détection et l'apparition du phénomène de vortex permet ainsi la mise en oeuvre d'une fonction d'assistance au pilote par l'intermédiaire du système de commandes de vol de l'aérodyne 10.

En cas de détection de l'approche de l'état d'anneaux tourbillonnaires par le dispositif de détection installé dans l'aérodyne 10, le système de commandes de vol de l'aérodyne 10 peut ainsi modifier, de manière automatique ou semi-automatique, les paramètres de vol de l'aérodyne 10 afin d'éviter que l'aérodyne 10 ne rentre dans l'état d'anneaux tourbillonnaires (par réduction du taux de descente ou actions sur le plateau cyclique (longitudinale ou latérale), par exemple).

L'unité de traitement de données 20 peut également être configurée pour réaliser une troisième analyse vibratoire comprenant : l'application d'une transformée d'Hilbert au flux de données de mesure correspondant à l'axe vertical Z du premier accéléromètre à trois axes 16a permettant d'étendre le signal réel dans le domaine complexe ; l'application d'une transformée de Fourier rapide (FFT) au signal obtenu par transformée d'Hilbert ; le filtrage du signal obtenu par FFT de plus ou moins 5Hz autour de la fréquence fondamentale du rotor principal 14 correspondant au régime courant du rotor principal 14 (Frotor = (NR * b) / 60, avec Frotor la fréquence fondamentale du rotor principal 14, NR la vitesse de rotation du rotor principal 14, et b le nombre de pales 15 du rotor principal 14) ; la reconstitution du signal filtré par application d'une transformée de Fourier inverse.

Il est ensuite possible de représenter la distribution de l'énergie du signal reconstruit dans le plan temps-fréquence via le carré du module de la transformée de Fourrier à court terme, cette représentation est appelée spectrogramme. On réalise donc un spectrogramme sur le signal précédemment filtré autour de la fréquence principale rotor dont on supprime la partie non physique du spectre (partie fréquence négative).

L'approche de l'état de vortex étant caractérisée par une augmentation de l'énergie vibratoire, on analyse la variation de l'amplitude du signal. Pour cela, la racine carrée de la variance ou, de manière équivalente, la moyenne quadratique des écarts du signal par rapport à sa moyenne est calculée (déviation standard) sur une fenêtre glissante de 0,7s. Un seuil est défini à partir de la moyenne de cette déviation standard.

Lorsque la déviation standard du signal est supérieure à ce seuil, un signal de détection est généré. Il est à noter que le seuil utilisé dans cette troisième analyse vibratoire pourrait également être modifié suivant le type d'aérodyne 10 et/ou le type de rotor principal 14.

Afin d'apporter plus de robustesse à la détection, il est possible d'appliquer la troisième analyse vibratoire sur toute une partie des voix de mesures des accéléromètres 16a, 16b, 16c afin de corréler les analyses et d'éviter la génération de fausses alarmes. De même, il est possible d'appliquer la troisième analyse vibratoire sur d'autres harmoniques de fréquences du rotor principal 14.

Il est à noter que cette troisième analyse vibratoire est totalement indépendante des première et seconde analyses vibratoires et peut se substituer à ces dernières. Cependant, pour plus de robustesse, cette troisième analyse vibratoire peut également être associée aux première et seconde analyses vibratoires afin de corréler les détections et potentiellement d'éviter de fausses alarmes.

Il est bien entendu que le mode de réalisation particulier qui vient d'être décrit a été donné à titre indicatif et non limitatif, et que des modifications peuvent être apportées sans que l'on s'écarte pour autant de la présente invention.

**Revendications**

1. Dispositif de détection de l'approche d'un état d'anneaux tourbillonnaires pour un aérodyne à voilure tournante (10), **caractérisé par le fait que** ledit dispositif de détection comprend un ensemble de capteurs de vibration (16a, 16b, 16c) configurés pour être répartis dans ou sur l'aérodyne à voilure tournante (10) et configurés pour détecter en différents points de l'aérodyne à voilure tournante (10) des vibrations au moins selon les axes longitudinal et vertical de l'aérodyne à voilure tournante (10), ledit dispositif de détection comprenant en outre une unité de traitement de données (20) reliée à l'ensemble de capteurs de vibration (16a, 16b, 16c), ladite unité de traitement de données (20) étant configurée pour : recevoir en temps réel des données de mesure en provenance de l'ensemble de capteurs de vibration (16, 16b, 16c), traiter les données de mesure reçues de manière à calculer en temps réel le spectre vibratoire de l'aérodyne à voilure tournante (10) selon au moins l'un des axes longitudinal et vertical de l'aérodyne à voilure tournante (10) au niveau d'au moins deux capteurs de vibration (16a, 16b, 16c) distincts parmi l'ensemble de capteurs de vibration (16a, 16b, 16c), détecter ou non en temps réel, par analyse vibratoire, l'approche d'un état d'anneaux tourbillonnaires en fonction du spectre vibratoire calculé, et émettre une alarme en cas de détection de l'approche d'un état d'anneaux tourbillonnaires.

2. Dispositif de détection de l'approche d'un état d'anneaux tourbillonnaires selon la revendication 1, **caractérisé par le fait que** chaque capteur de vibration (16a, 16b, 16c) est un accéléromètre à trois axes, à savoir un axe longitudinal X correspondant à l'axe longitudinal de l'aérodyne à voilure tournante (10), un axe transversal Y correspondant à l'axe transversal de l'aérodyne à voilure tournante (10) et un axe vertical Z.

3. Dispositif de détection de l'approche d'un état d'anneaux tourbillonnaires selon la revendication 2, **caractérisé par le fait que** l'ensemble de capteurs de vibration (16a, 16b, 16c) comprend un premier accéléromètre à trois axes (16a) configuré pour être installé dans la cabine (17) de l'aérodyne à voilure tournante (10), un deuxième accéléromètre à trois axes (16b) configuré pour être installé sur la boîte de transmission principale (18) de l'aérodyne à voilure tournante (10), et un troisième accéléromètre à trois axes (16c) configuré pour être installé sur le plancher mécanique (19) de l'aérodyne à voilure tournante (10) à proximité du centre de gravité de l'aérodyne à voilure tournante (10).

4. Dispositif de détection de l'approche d'un état d'anneaux tourbillonnaires selon la revendication 3, **caractérisé par le fait que** l'unité de traitement de données (20) est configurée pour réaliser au moins l'une parmi :

une première analyse vibratoire sur les flux de données de mesure correspondant à l'axe longitudinal X et à l'axe vertical Z du deuxième accéléromètre à trois axes (16b) comprenant, pour chacun des flux de données de mesure correspondant à l'axe longitudinal X et à l'axe vertical Z du deuxième accéléromètre à trois axes (16b), la comparaison de la fréquence fondamentale du rotor principal (14) de l'aérodyne à voilure tournante (10) à la fréquence prépondérante, c'est-à-dire correspondant au niveau maximal d'amplitude, du spectre vibratoire issu d'une transformée de Fourier discrète sur le flux de données de mesure correspondant, et, si la différence entre la fréquence prépondérante et la fréquence fondamentale du rotor principal (14) est supérieure à un seuil de différence de fréquences prédéterminé, la génération d'un signal de détection associé au flux de données de mesure correspondant ;
une seconde analyse vibratoire sur les flux de données de mesure correspondant à l'axe vertical Z du premier accéléromètre à trois axes (16a) et correspondant à l'axe longitudinal X et à l'axe vertical Z du troisième accéléromètre à trois axes (16c) comprenant, pour chacun des flux de données de mesure correspondant à l'axe vertical Z du premier accéléromètre à trois axes (16a) et correspondant à l'axe longitudinal X et à l'axe vertical Z du troisième accéléromètre à trois axes (16c), le filtrage numérique sans déphasage du flux de données de mesure correspondant à l'aide d'un filtre à réponse impulsionnelle finie passe-bas et d'un filtre à réponse impulsionnelle finie passe-haut, le calcul de la valeur efficace du signal issu du filtre passe-bas et de la valeur efficace du signal issu du filtre passe-haut, le calcul d'un rapport d'énergie correspondant à la valeur efficace du signal issu du filtre passe-haut divisée par la valeur efficace du signal issu du filtre passe-bas, et, si le rapport d'énergie est supérieur à un seuil de rapport d'énergie prédéterminé correspondant, la génération d'un signal de détection associé au flux de données de mesure correspondant, et
une troisième analyse vibratoire comprenant : l'application d'une transformée d'Hilbert au flux de données de mesure correspondant à l'axe vertical Z du premier accéléromètre à trois axes permettant d'étendre le signal réel dans le domaine complexe ; l'application d'une transformée de Fourier rapide, FFT, au signal obtenu par transformée d'Hilbert ; le filtrage du signal obtenu par FFT de plus ou moins 5Hz autour de la fréquence fondamentale du rotor principal correspondant au régime courant du rotor principal Frotor = (NR * b) / 60, avec Frotor la fréquence fondamentale du rotor principal, NR la vitesse de rotation du rotor principal, et b le nombre de pales du rotor principal ; la reconstitution du signal filtré par application d'une transformée de Fourier inverse ; la réalisation d'un spectrogramme sur le signal reconstruit et la suppression de la partie fréquence négative du spectre ; le calcul de la déviation standard de l'amplitude du spectrogramme sur une fenêtre glissante d'une durée prédéfinie ; et, si la déviation standard calculée est supérieure à un seuil prédéfini, la génération d'un signal de détection.

5. Dispositif de détection de l'approche d'un état d'anneaux tourbillonnaires selon la revendication 4, **caractérisé par le fait que** l'unité de traitement de données (20) est configurée pour réaliser simultanément la première analyse vibratoire et la seconde analyse vibratoire.

6. Dispositif de détection de l'approche d'un état d'anneaux tourbillonnaires selon la revendication 5, **caractérisé par le fait que** l'unité de traitement de données (20) est configurée pour détecter l'approche d'un état d'anneaux tourbillonnaires et émettre une alarme lorsque la première analyse vibratoire et la seconde analyse vibratoire génèrent simultanément au moins un signal de détection.

7. Dispositif de détection de l'approche d'un état d'anneaux tourbillonnaires selon la revendication 6, **caractérisé par le fait que** l'unité de traitement de données (20) est configurée pour détecter l'approche d'un état d'anneaux tourbillonnaires et générer une alarme lorsqu'au moins trois signaux de détection provenant des première et seconde analyses vibratoires sont générés simultanément.

8. Dispositif de détection de l'approche d'un état d'anneaux tourbillonnaires selon l'une des revendications 1 à 7, **caractérisé par le fait que** l'unité de traitement de données (20) est en outre configurée pour utiliser au moins l'une des mesures suivantes pour détecter l'approche d'un état d'anneaux tourbillonnaires : la mesure de la vitesse indiquée de l'aérodyne à voilure tournante (10), la mesure de la vitesse verticale de l'aérodyne à voilure tournante (10), et la mesure du régime de rotation du rotor principal (14) de l'aérodyne à voilure tournante (10).

9. Dispositif de détection de l'approche d'un état d'anneaux tourbillonnaires selon l'une des revendications 1 à 8, **caractérisé par le fait que** le dispositif de détection comprend en outre une unité d'avertissement reliée à l'unité de traitement de données (20) et configurée pour générer un avertissement d'approche d'état d'anneaux tourbillonnaires lorsque l'unité de traitement de données (20) émet une alarme, ledit avertissement d'approche d'état d'anneaux tourbillonnaires étant au moins l'un parmi sonore, visuel et haptique.

10. Aérodyne à voilure tournante (10) comprenant un dispositif de détection de l'approche d'un état d'anneaux tourbillonnaires selon l'une des revendications 1 à 9, l'ensemble de capteurs de vibration (16a, 16b, 16c) dudit dispositif de détection étant répartis dans ou sur l'aérodyne à voilure tournante (10).

11. Aérodyne à voilure tournante (10) selon la revendication 10, **caractérisé par le fait qu'**il comprend en outre un système de commandes de vol relié à l'unité de traitement de données (20) du dispositif de détection et configuré pour modifier, de manière automatique ou semi-automatique, le pilotage de l'aérodyne à voilure tournante (10) lorsque l'unité de traitement de données (20) du dispositif de détection émet une alarme, de manière à empêcher l'entrée de l'aérodyne à voilure tournante (10) dans l'état d'anneaux tourbillonnaires.

12. Procédé de détection de l'approche d'un état d'anneaux tourbillonnaires par un aérodyne à voilure tournante (10) selon la revendication 10 ou la revendication 11, ledit procédé comprenant, par l'unité de traitement de données (20) du dispositif de détection de l'approche d'un état d'anneaux tourbillonnaires : recevoir en temps réel des données de mesure en provenance de l'ensemble de capteurs de vibration (16a, 16b, 16c) ; traiter les données de mesure reçues de manière à calculer en temps réel le spectre vibratoire de l'aérodyne à voilure tournante (10) au niveau d'au moins deux capteurs de vibration (16a, 16b, 16c) distincts parmi l'ensemble de capteurs de vibration (16a, 16b, 16c) ; détecter ou non en temps réel, par analyse vibratoire, l'approche d'un état d'anneaux tourbillonnaires en fonction du spectre vibratoire calculé ; et émettre une alarme en cas de détection de l'approche d'un état d'anneaux tourbillonnaires.

**Patentansprüche**

1. - Vorrichtung zur Erfassung der Annäherung eines Wirbelringzustands für ein Drehflügelluftfahrzeug (10), **dadurch gekennzeichnet, dass** die Erfassungsvorrichtung eine Anordnung von Vibrationssensoren (16a, 16b, 16c) umfasst, die ausgelegt sind, um in oder auf dem Drehflügelluftfahrzeug (10) verteilt zu sein und ausgelegt sind, um an verschiedenen Punkten des Drehflügelluftfahrzeugs (10) Vibrationen mindestens gemäß der Längs- und vertikalen Achse des Drehflügelluftfahrzeugs (10) zu erfassen, wobei die Erfassungsvorrichtung ferner eine Datenverarbeitungseinheit (20) umfasst, die mit der Anordnung von Vibrationssensoren (16a, 16b, 16c) verbunden ist, wobei die Datenverarbeitungseinheit (20) ausgelegt ist, um: in Echtzeit Messdaten von der Anordnung von Vibrationssensoren (16, 16b, 16c) zu empfangen, die empfangenen Messdaten derart zu verarbeiten, dass in Echtzeit das Vibrationsspektrum des Drehflügelluftfahrzeugs (10) gemäß mindestens einer von der Längs- und vertikalen Achse des Drehflügelluftfahrzeugs (10) im Bereich von mindestens zwei verschiedenen Vibrationssensoren (16a, 16b, 16c) der Anordnung von Vibrationssensoren (16a, 16b, 16c) berechnet wird, in Echtzeit durch Vibrationsanalyse die Annäherung eines Wirbelringzustands in Abhängigkeit von dem berechneten Vibrationsspektrum zu erfassen oder nicht und im Fall der Erfassung der Annäherung eines Wirbelringzustands einen Alarm zu senden.

**2.** - Vorrichtung zur Erfassung der Annäherung eines Wirbelringzustands nach Anspruch 1, **dadurch gekennzeichnet, dass** jeder Vibrationssensor (16a, 16b, 16c) ein Beschleunigungsmesser mit drei Achsen ist, nämlich einer Längsachse X, die der Längsachse des Drehflügelluftfahrzeugs (10) entspricht, einer Querachse Y, die der Querachse des Drehflügelluftfahrzeugs (10) entspricht, und einer vertikalen Achse Z.

**3.** - Vorrichtung zur Erfassung der Annäherung eines Wirbelringzustands nach Anspruch 2, **dadurch gekennzeichnet, dass** die Anordnung von Vibrationssensoren (16a, 16b, 16c) einen ersten Beschleunigungsmesser mit drei Achsen (16a) umfasst, der ausgelegt ist, um in der Kabine (17) des Drehflügelluftfahrzeugs (10) installiert zu sein, einen zweiten Beschleunigungsmesser mit drei Achsen (16b), der ausgelegt ist, um auf dem Hauptgetriebegehäuse (18) des Drehflügelluftfahrzeugs (10) installiert zu sein, und einen dritten Beschleunigungsmesser mit drei Achsen (16c), der ausgelegt ist, um auf dem mechanischen Boden (19) des Drehflügelluftfahrzeugs (10) in der Nähe des Schwerkraftzentrums des Drehflügelluftfahrzeugs (10) installiert zu sein.

**4.** - Vorrichtung zur Erfassung der Annäherung eines Wirbelringzustands nach Anspruch 3, **dadurch gekennzeichnet, dass** die Datenverarbeitungseinheit (20) ausgelegt ist, um mindestens eine der folgenden Analysen durchzuführen:

    eine erste Vibrationsanalyse anhand der Messdatenströme entsprechend der Längsachse X und der vertikalen Achse Z des zweiten Beschleunigungsmessers mit drei Achsen (16b), die für jeden der Messdatenströme entsprechend der Längsachse X und der vertikalen Achse Z des zweiten Beschleunigungsmessers mit drei Achsen (16b) den Vergleich der Grundfrequenz des Hauptrotors (14) des Drehflügelluftfahrzeugs (10) mit der vorherrschenden Frequenz, das heißt, die dem maximalen Amplitudenbereich entspricht, des aus einer diskreten Fourier-Transformation anhand des entsprechenden Messdatenstroms abgeleiteten Vibrationsspektrums, und wenn die Differenz zwischen der vorherrschenden Frequenz und der Grundfrequenz des Hauptrotors (14) größer als ein vorher festgelegter Frequenzdifferenzgrenzwert ist, die Erzeugung eines Erfassungssignals umfasst, das dem entsprechenden Messdatenstrom zugeordnet ist;
eine zweite Vibrationsanalyse anhand der Messdatenströme entsprechend der vertikalen Achse Z des ersten Beschleunigungsmessers mit drei Achsen (16a) und entsprechend der Längsachse X und der vertikalen Achse Z des dritten Beschleunigungsmessers mit drei Achsen (16c), die für jeden der Messdatenströme entsprechend der vertikalen Achse Z des ersten Beschleunigungsmessers mit drei Achsen (16a) und entsprechend der Längsachse X und der vertikalen Achse Z des dritten Beschleunigungsmessers mit drei Achsen (16c) die digitale Filterung ohne Phasenverschiebung des entsprechenden Messdatenstroms mit Hilfe eines Tiefpassfilters mit endlicher Impulsantwort und eines Hochpassfilters mit endlicher Impulsantwort, die Berechnung des Effektivwerts des vom Tiefpassfilter ausgegebenen Signals und des Effektivwerts des vom Hochpassfilter ausgegebenen Signals, die Berechnung eines Energieverhältnisses, das dem Effektivwert des vom Hochpassfilter ausgegebenen Signals, dividiert durch den Effektivwert des vom Tiefpassfilter ausgegebenen Signals, entspricht und wenn das Energieverhältnis über einem entsprechenden vorher festgelegten Energieverhältnisgrenzwert liegt, die Erzeugung eines Erfassungssignals umfasst, das dem entsprechenden Messdatenstrom zugeordnet ist, und eine dritte Vibrationsanalyse, die umfasst: die Anwendung einer Hilbert-Transformation auf den Messdatenfluss entsprechend der vertikalen Achse Z des ersten Beschleunigungsmessers mit drei Achsen, die erlaubt, das Istsignal in den komplexen Bereich zu erweitern; die Anwendung einer schnellen Fourier-Transformation, FFT, auf das durch die Hilbert-Transformation erhaltene Signal; die Filterung des durch FFT erhaltenen Signals mit mehr oder weniger 5 Hz um die Grundfrequenz des Hauptrotors entsprechend der laufenden Drehzahl des Hauptrotors Frotor = (NR * b) / 60 mit Frotor als Grundfrequenz des Hauptrotors, NR als Drehgeschwindigkeit des Hauptrotors und b als Anzahl der Schaufeln des Hauptrotors; die Wiederherstellung des gefilterten Signals durch Anwendung einer inversen Fourier-Transformation; die Erstellung eines Spektrogramms anhand des wiederhergestellten Signals und die Löschung des negativen Frequenzteils des Spektrums; die Berechnung der Standardabweichung der Amplitude des Spektrogramms für ein gleitendes Fenster einer vorher festgelegten Dauer; und, wenn die berechnete Standardabweichung über einem vorher festgelegten Grenzwert liegt, die Erzeugung eines Erfassungssignals.

5. - Vorrichtung zur Erfassung der Annäherung eines Wirbelringzustands nach Anspruch 4, **dadurch gekennzeichnet, dass** die Datenverarbeitungseinheit (20) ausgelegt ist, um die erste Vibrationsanalyse und die zweite Vibrationsanalyse gleichzeitig durchzuführen.

6. - Vorrichtung zur Erfassung der Annäherung eines Wirbelringzustands nach Anspruch 5, **dadurch gekennzeichnet, dass** die Datenverarbeitungseinheit (20) ausgelegt ist, um die Annäherung eines Wirbelringzustands zu erfassen und einen Alarm zu senden, wenn die erste Vibrationsanalyse und die zweite Vibrationsanalyse gleichzeitig mindestens ein Erfassungssignal erzeugen.

7. - Vorrichtung zur Erfassung der Annäherung eines Wirbelringzustands nach Anspruch 6, **dadurch gekennzeichnet, dass** die Datenverarbeitungseinheit (20) ausgelegt ist, um die Annäherung eines Wirbelringzustands zu erfassen und einen Alarm zu erzeugen, wenn mindestens drei Erfassungssignale von der ersten und zweiten Vibrationsanalyse gleichzeitig erzeugt werden.

8. - Vorrichtung zur Erfassung der Annäherung eines Wirbelringzustands nach einem der Ansprüche 1 bis 7, **dadurch gekennzeichnet, dass** die Datenverarbeitungseinheit (20) ferner ausgelegt ist, um mindestens eine der folgenden Messungen zur Erfassung der Annäherung eines Wirbelringzustands zu verwenden: die auf dem Drehflügelluftfahrzeug (10) angegebene Messung der Geschwindigkeit, die Messung der vertikalen Geschwindigkeit des Drehflügelluftfahrzeugs (10) und die Messung der Drehgeschwindigkeit des Hauptrotors (14) des Drehflügelluftfahrzeugs (10).

9. - Vorrichtung zur Erfassung der Annäherung eines Wirbelringzustands nach einem der Ansprüche 1 bis 8, **dadurch gekennzeichnet, dass** die Erfassungsvorrichtung ferner eine Warneinheit umfasst, die mit der Datenverarbeitungseinheit (20) verbunden und ausgelegt ist, um eine Warnung bezüglich der Annäherung eines Wirbelringzustands zu erzeugen, wenn die Datenverarbeitungseinheit (20) einen Alarm sendet, wobei die Warnung bezüglich der Annäherung eines Wirbelringzustands mindestens entweder akustisch, visuell oder haptisch ist.

10. - Drehflügelluftfahrzeug (10), das eine Vorrichtung zur Erfassung der Annäherung eines Wirbelringzustands nach einem der Ansprüche 1 bis 9 umfasst, wobei die Anordnung von Vibrationssensoren (16a, 16b, 16c) der Erfassungsvorrichtung in oder auf dem Drehflügelluftfahrzeug (10) verteilt ist.

11. - Drehflügelluftfahrzeug (10) nach Anspruch 10, **dadurch gekennzeichnet, dass** es ferner ein Flugsteuerungssystem umfasst, das mit der Datenverarbeitungseinheit (20) der Erfassungsvorrichtung verbunden und ausgelegt ist, um die Lenkung des Drehflügelluftfahrzeugs (10) automatisch oder halbautomatisch zu verändern, wenn die Datenverarbeitungseinheit (20) der Erfassungsvorrichtung einen Alarm sendet, um den Eintritt des Drehflügelluftfahrzeugs (10) in den Wirbelringzustand zu verhindern.

12. - Verfahren zur Erfassung der Annäherung eines Wirbelringzustands durch ein Drehflügelluftfahrzeug (10) nach Anspruch 10 oder Anspruch 11, wobei das Verfahren mittels der Datenverarbeitungseinheit (20) der Vorrichtung zur Erfassung der Annäherung eines Wirbelringzustands umfasst: Empfangen in Echtzeit der Messdaten von der Anordnung von Vibrationssensoren (16a, 16b, 16c); Verarbeiten der empfangenen Messdaten derart, dass das Vibrationsspektrum des Drehflügelluftfahrzeugs (10) im Bereich von mindestens zwei verschiedenen Vibrationssensoren (16a, 16b, 16c) der Anordnung von Vibrationssensoren (16a, 16b, 16c) in Echtzeit berechnet wird; Erfassen oder nicht in Echtzeit durch Vibrationsanalyse der Annäherung eines Wirbelringzustands in Abhängigkeit vom berechneten Vibrationsspektrum und Senden eines Alarms bei Erfassung der Annäherung eines Wirbelringzustands.

**Claims**

1. - A device for detecting the approach of a vortex ring state for a rotary wing aerodyne (10), **characterized in that** said detection device comprises a set of vibration sensors (16a, 16b, 16c) configured to be distributed in or on the rotary wing aerodyne (10) and configured to detect vibrations at different points of the rotary wing aerodyne (10) at least along the longitudinal and vertical axes of the rotary wing aerodyne (10), said detection device further comprising a data processing unit (20) connected to the set of vibration sensors (16a, 16b, 16c), said data processing unit (20) being configured to: receive measurement data in real time from the set of vibration sensors (16, 16b, 16c), process the measurement data received so as to calculate in real time the vibration spectrum of the rotary wing aerodyne (10) along at least one of the longitudinal and vertical axes of the rotary wing aerodyne (10) on at least two distinct vibration sensors (16a, 16a, 16b, 16c) from the set of vibration sensors (16a, 16b, 16c), detect or not in real time, by vibration analysis, the approach of a vortex ring state as a function of the calculated vibration spectrum, and issue an alarm in the event of detection of the approach of a vortex ring state.

2. - A device for detecting the approach of a vortex ring state according to claim 1, **characterized in that** each vibration sensor (16a, 16b, 16c) is a three-axis accelerometer, namely a longitudinal axis X corresponding to the longitudinal axis of the rotary wing aerodyne (10), a transverse axis Y corresponding to the transverse axis of the rotary wing aerodyne (10) and a vertical axis Z.

3. - A device for detecting the approach of a vortex ring state of claim 2, **characterized in that** the vibration sensor set (16a, 16b, 16c) comprises a first three-axis accelerometer (16a) configured to be installed in the cabin (17) of the rotary wing aerodyne (10), a second three-axis accelerometer (16b) configured to be installed on the main gearbox (18) of the rotary wing aerodyne (10), and a third three-axis accelerometer (16c) configured to be installed on the engine deck (19) of the rotary wing aerodyne (10) proximate to the centre of gravity of the rotary wing aerodyne (10).

4. - A device for detecting the approach of a vortex ring state according to claim 3, **characterized in that** the data processing unit (20) is configured to perform at least one of:

    a first vibration analysis on the measurement data streams corresponding to the longitudinal axis X and the vertical axis Z of the second three-axis accelerometer (16b) comprising, for each of the measurement data streams corresponding to the longitudinal axis X and the vertical axis Z of the second three-axis accelerometer (16b), comparing the fundamental frequency of the main rotor (14) of the rotary wing aircraft (10) with the predominant frequency, namely corresponding to the maximum amplitude level, of the vibration spectrum derived from a discrete Fourier transform on the corresponding measurement data stream, and, if the difference between the predominant frequency and the fundamental frequency of the main rotor (14) is greater than a predetermined frequency difference threshold, generating a detection signal associated with the corresponding measurement data stream;

    a second vibration analysis on the measurement data streams corresponding to the vertical axis Z of the first three-axis accelerometer (16a) and corresponding to the longitudinal axis X and vertical axis Z of the third three-axis accelerometer (16c) comprising, for each of the measurement data streams corresponding to the vertical axis Z of the first three-axis accelerometer (16a) and corresponding to the longitudinal axis X and vertical axis Z of the third three-axis accelerometer (16c), digital filtering without phase shifting of the corresponding measurement data stream using a low-pass finite impulse response filter and a high-pass finite impulse response filter, calculating the RMS value of the signal from the low-pass filter and the RMS value of the signal from the high-pass filter, calculating an energy ratio corresponding to the RMS value of the signal from the high-pass filter divided by the RMS value of the signal from the low-pass filter, and, if the energy ratio is greater than a corresponding predetermined energy ratio threshold, generating a detection signal associated with the corresponding measurement data stream, and a third vibration analysis comprising: applying a Hilbert transform to the measurement data stream corresponding to the vertical axis Z of the first three-axis accelerometer to extend the real signal into the complex domain; applying a Fast Fourier Transform, FFT, to the obtained Hilbert transformed signal; filtering the obtained FFT signal by plus or minus 5Hz around the fundamental main rotor frequency corresponding to the current main rotor speed Frotor = (NR * b) / 60, where Frotor is the fundamental main rotor frequency, NR is the main rotor speed, and b is the number of main rotor blades; reconstructing the filtered signal by applying an inverse Fourier transform; producing a spectrogram on the reconstructed signal and removing the negative frequency part of the spectrum; calculating the standard deviation of the amplitude of the spectrogram over a sliding window of a predefined duration; and, if the calculated standard deviation is above a predefined threshold, generating a detection signal.

5. - A device for detecting the approach of a vortex ring state according to claim 4, **characterized in that** the data processing unit (20) is configured to perform the first vibration analysis and the second vibration analysis simultaneously.

6. - A device for detecting the approach of a vortex ring state according to claim 5, **characterized in that** the data processing unit (20) is configured to detect the approach of a vortex ring state and to issue an alarm when the first vibration analysis and the second vibration analysis simultaneously generate at least one detection signal.

7. - A device for detecting the approach of a vortex ring state according to claim 6, **characterized in that** the data processing unit (20) is configured to detect the approach of a vortex ring state and generate an alarm when at least three detection signals from the first and second vibration analyses are generated simultaneously.

8. - A device for detecting the approach of a vortex ring state according to any of claims 1 to 7, **characterized in that** the data processing unit (20) is further configured to use at least one of the following measurements to detect the approach of a vortex ring state: measuring the indicated speed of the rotary wing aerodyne (10), measuring the vertical speed of the rotary wing aerodyne (10), and measuring the rotation speed of the main rotor (14) of the rotary wing aerodyne (10).

9. - A device for detecting the approach of a vortex ring state according to any of claims 1 to 8, **characterized in that** the detection device further comprises a warning unit connected to the data processing unit (20) and configured to generate a vortex ring state approach warning when the data processing unit (20) issues an alarm, said vortex ring state approach warning being at least one of audible, visual and haptic.

10. - A rotary wing aerodyne (10) comprising a device for detecting the approach of a vortex ring state according to one of claims 1 to 9, the set of vibration sensors (16a, 16b, 16c) of said detection device being distributed in or on the rotary wing aerodyne (10).

11. - The rotary wing aerodyne (10) according to claim 10, **characterized in that** it further comprises a flight control system connected to the data processing unit (20) of the detection device and configured to modify, automatically or semi-automatically, the piloting of the rotary wing aerodyne (10) when the data processing unit (20) of the detection device issues an alarm, so as to prevent the rotary wing aerodyne (10) from entering the vortex ring state.

12. - A method of detecting the approach of a vortex ring state by a rotary wing aerodyne (10) according to claim 10 or claim 11, said method comprising, by the data processing unit (20) of the vortex ring state detection device: receiving in real time measurement data from the set of vibration sensors (16a, 16b, 16c); processing the received measurement data so as to calculate in real time the vibration spectrum of the rotary wing aerodyne (10) on at least two distinct vibration sensors (16a, 16b, 16c) among the set of vibration sensors (16a, 16b, 16c); detecting or not in real time, by vibration analysis, the approach of a vortex ring state according to the calculated vibration spectrum; and issuing an alarm in the event of detection of the approach of a vortex ring state.

[Fig. 1]

Fig.1

[Fig. 2a]

Fig.2a

Vitesse d'avancement

[Fig. 2b]

Fig.2b

Temps (s)

[Fig. 3]

Fig.3

[Fig. 4]

Fig.4

## RÉFÉRENCES CITÉES DANS LA DESCRIPTION

**Documents brevets cités dans la description**

- EP 1400885 A
- US 2006006279 A1
- WO 2012007157 A1
- EP 3406520 A1

**Littérature non-brevet citée dans la description**

- Flight measurements of the vibration experienced by a tandem helicopter in transition, vortex-ring state, landing, approach, and yawed flight. **J.E. YEATES.** Note Technique 4409. Comité Consultatif National pour l'Aéronautique, Septembre 1958